# EUROPEAN PATENT SPECIFICATION

(11) **EP 1 452 572 B1**
(45) Date of publication and mention of the grant of the patent: **05.01.2011**
(21) Application number: 04002538.9
(22) Date of filing: 05.02.2004
(51) Int. Cl.: C09D 151/08, C08F 283/02

(54) **Coating agents and a process for the preparation of multi-layer coatings**
Anstrichmittel und Verfahren zur Herstellung von Mehrschichtbeschichtungen
Agents de revêtement et procédé de préparation de revêtements multicouches

(30) Priority: 10.02.2003 US 446325 P; 07.11.2003 US 704442
(43) Date of publication of application: 01.09.2004
(73) Proprietor: E.I. DU PONT DE NEMOURS AND COMPANY, Wilmington, DE 19898 (US)
(72) Inventor: Boehme, Angelika, 51379 Leverkusen (DE); Flosbach, Carmen, 42287 Wuppertal (DE); Duecoffre, Volker, 42119 Wuppertal (DE); Kleuser, Birgit, 42369 Wuppertal (DE)
(74) Representative: Kimpel, Christine

(56) References cited:
- DE-A- 19 918 132
- US-A- 5 384 358
- US-A- 6 048 936

## Description

### Field of the Invention

The invention relates to coating agents and to a process for the preparation of multi-layer coatings using the coating agents, particularly for the preparation of external clear coat and top coat layers of multi-layer coatings.

### Background of the Invention

Coating agents usable as automotive clear or top coats which contain polyester polyol/(meth)acrylic copolymer hybrid binders in the form of seed polymers produced by free-radical copolymerization of appropriate olefinically unsaturated monomers in the presence of polyester polyols are known, for example, from EP 0 579 193, EP 0 812 867, US 5,480,936, US 6,063,448 and US 6 048 936.

It has been found that coating layers having elevated scratch resistance, chemical resistance and hardness can be obtained if a coating agent based on polyester polyol/(meth)acrylic copolymer hybrid binders having both an elevated hydroxyl functionality and an elevated hydroxyl group content in the underlying specific polyester polyol are applied to a substrate, and then cured (cross-linked). A relatively low content by weight of the polyester polyol in the polyester polyol/(meth)acrylic copolymer hybrid binder may simultaneously be selected.

### Summary of the Invention

The invention provides a coating agent of which the resin solids are composed of
(a) 10 to 80 wt-% of a polyester polyol/(meth)acrylic copolymer hybrid binder with an acid value of 0 to 40 mg KOH/g and a hydroxyl value of 100 to 250 mg KOH/g,
(b) 0 to 50 wt-% of at least one hydroxyl-functional binder that is different from the polyester polyol/(meth)acrylic copolymer hybrid binder (a) and/or at least one hydroxyl-functional reactive diluent, and
(c) 20 to 60 wt-% of at least one cross-linking agent for the hydroxyl-functional components (a) and (b),
wherein the polyester polyol/(meth)acrylic copolymer hybrid binder (a) is obtained by free-radically copolymerizing, in a non-aqueous phase, 55 to 90 wt-%, preferably 70 to 90 wt-% of a (meth)acrylic monomer mixture (a1) comprising free-radically copolymerizable, olefinically unsaturated monomers in the presence of 10 to 45 wt-%, preferably 10 to 30 wt-% of a non-aromatic polyester polyol (a2) having a calculated molecular mass from 600 to 1400, an acid value from 0 to 30 mg KOH/g and a hydroxyl value from 250 to 600 mg KOH/g with a calculated hydroxyl functionality from 4.5 to 10, wherein the polyester polyol (a2) comprises (1) hydroxyl components comprising 0 wt-% to 20 wt-% of at least one diol and 80 wt-% to 100 wt-% of at least one polyol having 3 to 6 hydroxyl groups,
(2) carboxyl components comprising 0 wt-% to 20 wt-% of at least one monocarboxylic acid and 80 wt-% to 100 wt-% of at least one dicarboxylic acid, and optionally
(3) at least one hydroxycarboxylic acid component,
the sum of the percentages by weight of components (a) to (c) and of components (1) and of components (2) being 100% in each case.

The sum of the percentages by weight of components (a1) and (a2) is, of course, also 100%.

### Detailed Description of the Embodiments

The term "(meth)acrylic" used in the description and in the claims is synonymous with "acrylic and/or methacrylic".

The polyester polyol/(meth)acrylic copolymer hybrid binder (a) present in the coating agents according to the invention comprises a hybrid polymer, in which the polyester polyol (a2) and the (meth)acrylic copolymer formed by the free-radical copolymerization of the monomer mixture (a1) are present in the form of an interpenetrating polymer network, and does not comprise a graft copolymer formed by the free-radical graft copolymerization of the monomer mixture (a1) onto either olefinically unsaturated double bonds in the polyester polyol (a2), or free-radical sites formed by H abstraction on the backbone of the polyester polyol (a2). Of course, the formation of graft copolymer structures in the hybrid polymer by corresponding secondary reactions cannot be completely ruled out, but the formation of such structures is not deliberately sought and, to the extent that influence may be exerted by the selection of raw materials and reaction conditions, is avoided.

Free-radical copolymerization of the monomer mixture (a1), which includes (meth)acrylic monomers, may proceed by conventional processes. In this reaction, the polyester polyol (a2), optionally mixed with one or more organic solvents, for example as a 40 to 95 wt-% organic solution, is initially introduced into the reaction vessel, heated to the reaction temperature and then the monomer mixture (a1) and free-radical initiators are added.

The free-radical copolymerization is performed, for example, at temperatures of 80°C to 180°C, preferably at 100°C to 150°C.

The copolymerization reaction may be initiated with conventional initiators that are thermally dissociable into free radicals. Examples of free-radical initiators are dialkyl peroxides, such as di-tert-butyl peroxide, dicumyl peroxide; diacyl peroxides, such as dibenzoyl peroxide, dilauroyl peroxide; hydroperoxides, such as cumene hydroperoxide, tert-butyl hydroperoxide; peresters, such as tert-butyl perbenzoate, tert-butyl per-2-ethylhexanoate; peroxy dicarbonates; perketals; ketone peroxides, such as cyclohexane peroxide, methyl isobutyl ketone peroxide and azo compounds, such as azobisisobutyronitrile; C-C-cleaving initiators, such as for example benzopinacole derivatives.

The free-radical initiators are in general added, for example, in a quantity of 0.1 to 4 wt-%, relative to the total quantity of the monomer mixture (a1). The monomers of the monomer mixture (a1) may also be added separately or with a time delay during the copolymerization. The monomers or the monomer mixture (a1) used may either contain the free-radical initiators, or the free-radical initiators may be added to the monomer mixture (a1) optionally with a slight time delay or may be separately added to the reaction medium.

As described above, the free-radical copolymerization proceeds in the presence of polyester polyol (a2), which may be present in the form of a solution by being mixed with one or more organic solvents. The solvents that may be used are, for example, those that are also used either in, or after the conclusion of, the synthesis of the polyester polyol (a2); the polyester polyol (a2) may accordingly initially be introduced as the solution, which was obtained on production thereof. Other suitable solvents may, however, also be used. Examples of suitable solvents are those conventionally used in connection with coatings, such as may also be used in the coating composition, i.e. glycol ethers, such as ethylene glycol monobutyl ether, diethylene glycol monobutyl ether, dipropylene glycol dimethyl ether, dipropylene glycol monomethyl ether, ethylene glycol dimethyl ether; glycol ether esters, such as ethylene glycol monoethyl ether acetate, ethylene glycol monobutyl ether acetate, 3-methoxy-n-butyl acetate, diethylene glycol monobutyl ether acetate, methoxypropyl acetate; esters, such as butyl acetate, isobutyl acetate, amyl acetate; ketones, such as methyl ethyl ketone, methyl isobutyl ketone, diisobutyl ketone, cyclohexanone, isophorone; alcohols, such as methanol, ethanol, propanol, butanol; aromatic hydrocarbons, such as xylene, Solvesso® 100 (mixture of aromatic hydrocarbons with a boiling range from 155 to 185°C); and aliphatic hydrocarbons.

Conventional chain-transfer agents, such as mercaptans, thioglycolic acid esters, chlorinated hydrocarbons, cumene, and dimeric methylstyrene may also be used in the free-radical copolymerization.

The composition of the monomer mixture (a1) includes (meth)acrylic monomers and depends upon the nature and quantity of the polyester polyol (a2) used as the basis for the free-radical copolymerization, and is selected such that the resultant polyester polyol/(meth)acrylic copolymer hybrid binder (a) has an acid value of 0 to 40 mg KOH/g and a hydroxyl value of 100 to 250, preferably of 120 to 200 mg KOH/g. The monomer mixture (a1) may accordingly comprise olefinically unsaturated, free-radically copolymerizable monomers comprising acid groups and/or olefinically unsaturated, free-radically copolymerizable monomers comprising hydroxyl groups.

Examples of olefinically unsaturated, free-radically copolymerizable monomers with hydroxyl groups usable in the monomer mixture (a1) are hydroxyethyl (meth)acrylate, butanediol mono(meth)acrylate, hydroxypropyl (meth)acrylate, adducts prepared from glycidyl (meth)acrylate and saturated fatty acids, such as acetic acid or propionic acid, and adducts prepared from glycidyl esters of highly branched monocarboxylic acids with unsaturated COOH-functional compounds, such as, for example, the adduct formed from Cardura® E (from Resolution Performance Products located in Hoogvliet, The Netherlands) and (meth)acrylic acid. Further examples are reaction products of hydroxyl-functional monomers with caprolactone. Preferred hydroxyl-functional monomers are butanediol mono(meth)acrylate, hydroxyethyl (meth)acrylate and hydroxypropyl (meth)acrylate.

Examples of olefinically unsaturated, free-radically copolymerizable monomers with acid groups, in particular carboxyl groups, usable in the monomer mixture (a1), are unsaturated mono- and/or dicarboxylic acids and/or semi-esters of dicarboxylic acids, such as, for example, (meth)acrylic, itaconic, crotonic, isocrotonic, aconitic, maleic and fumaric acid, semi-esters of maleic and fumaric acid, beta-carboxyethyl (meth)acrylate, adducts of hydroxyalkyl (meth)acrylates with carboxylic anhydrides, such as, for example, phthalic acid mono-2-methacryloyloxyethyl ester, and semi-esters prepared from maleic anhydride and saturated aliphatic alcohols such as, for example, ethanol, propanol, and (iso)butanol. Preferred monomers with acid groups are acrylic acid and methacrylic acid.

Examples of non-functionalized monomers usable in the monomer mixture (a1) are (cyclo)alkyl (meth)acrylates, such as methyl (meth)acrylate, ethyl (meth)acrylate, propyl (meth)acrylate, butyl (meth)acrylate, isopropyl (meth)acrylate, isobutyl (meth)acrylate, tert-butyl (meth)acrylate, pentyl (meth)acrylate, hexyl (meth)acrylate, cyclohexyl (meth)acrylate, 2-ethylhexyl (meth)acrylate, octyl (meth)acrylate, 3,5,5-trimethylhexyl (meth)acrylate, decyl (meth)acrylate, dodecyl (meth)acrylate, hexadecyl (meth)acrylate, octadecyl (meth)acrylate, lauryl (meth)acrylate, isobornyl (meth)acrylate, and 4-tert-butyl cyclohexyl methacrylate; vinylaromatic compounds, such as styrene, vinyltoluenes, alpha-methylstyrene, o-, m- or p-methylstyrene, 2,5-dimethylstyrene, p-methoxystyrene, and p-tert-butylstyrene; vinyl ethers; vinyl esters of alpha,alpha-dialkyl-substituted branched aliphatic monocarboxylic acids, such as VEOVA® 10 (from Resolution Performance Products located in Hoogvliet, The Netherlands); and alkyl esters of maleic, fumaric, tetrahydrophthalic, crotonic, isocrotonic, vinylacetic and itaconic acid.

The monomer mixture (a1) may also further comprise small proportions of up to 5 wt-% of monomers with at least two free-radically polymerizable, olefinically unsaturated double bonds, such as hexanediol di(meth)acrylate, ethylene glycol di(meth)acrylate, butanediol di(meth)acrylate, trimethylolpropane tri(meth)acrylate and similar compounds. Preferably, however, the proportion of such monomers is below 5 wt-%, the monomer mixture (a1) particularly preferably containing no such monomers.

The polyester polyol (a2) used in the free-radical copolymerization of the monomer mixture (a1) comprises a non-aromatic polyester polyol, i.e. it is composed of non-aromatic polyester building blocks. The polyester polyol (a2) may, however, also contain aromatic structures in small quantity proportions of, for example, up to 2 wt-% (calculated as C₆, molecular mass 72). These small quantity proportions of aromatic structures, however, may be caused merely by technical impurities of the inherently non-aromatic polyester building blocks. Preferably, the non-aromatic polyester polyol (a2) does not contain any aromatic structures. In addition, the non-aromatic polyester polyol (a2) preferably does not contain any olefinic double bonds, i.e. it preferably does not contain any olefinically unsaturated polyester building blocks.

It is essential that the polyester polyol (a2) used as the basis for the free-radical copolymerization of the monomer mixture (a1) has a calculated molecular mass of 600 to 1400, preferably of 800 to 1200, an acid value of 0 to 30 mg KOH/g, a hydroxyl value of 250 to 600 mg KOH/g, preferably of 270 to 400 mg KOH/g and, specifically, a calculated hydroxyl functionality of 4.5 to 10, preferably of 4.8 to 8, and is comprised of
(1) hydroxyl components comprising 0 to 20 wt-% of at least one diol and 80 to 100 wt-% of at least one polyol with 3 to 6 hydroxyl groups,
(2) carboxyl components comprising 0 to 20 wt-% of at least one monocarboxylic acid and 80 to 100 wt-% of at least one dicarboxylic acid, and optionally
(3) at least one hydroxylcarboxylic acid component,
wherein the sum of the percentages by weight of components (1) and of components (2) in each case amounts to 100 wt-%.

The polyester polyol (a2) is preferably comprised of 30 wt-% to 60 wt-%, preferably 40 wt-% to 55 wt-% of at least one hydroxyl component (1), 30 wt-% to 70 wt-%, preferably 45 wt-% to 60 wt-% of at least one carboxyl component (2) and 0 wt-% to 10 wt-%, preferably 0 wt-% of at least one hydroxycarboxylic acid component (3). The sum of the percentages by weight of components (1) to (3) is 100 wt-%, and does not take into account water of reaction formed during the synthesis of polyester polyol (a2).

The hydroxyl components (1) contained in the polyester polyol (a2) are composed of 0 wt-% to 20 wt-% of at least one (cyclo)aliphatic diol and 80 wt-% to 100 wt-%, preferably exclusively of at least one (cyclo)aliphatic polyol having 3 to 6 hydroxyl groups.

Examples of (cyclo)aliphatic diols that may be used used as hydroxyl components (1) in the polyester polyol (a2) include ethylene glycol; 1,2-propylene glycol and 1,3-propylene glycol; butane-1,3-diol, butane-1,4-diol and butane-2,3-diol; pentane-1,5-diol; hexane-1,6-diol; trimethylhexane diol; diethylene glycol; triethylene glycol; hydrogenated bisphenols; 1,4-cyclohexane dimethanol; neopentyl glycol; and butylethylpropane diol. Hexane-1,6-diol, neopentyl glycol, and butylethylpropane diol are preferred.

Examples of (cyclo)aliphatic polyols having 3 to 6 hydroxyl groups that may be used as hydroxyl components (1) in the polyester polyol (a2) include glycerol, trimethylolpropane, trimethylolethane, pentaerythritol, dipentaerythritol, ditrimethylolpropane, sorbitol, and mannitol. Glycerol, trimethylolpropane and pentaerythritol are preferred, particularly trimethylolpropane and pentaerythritol.

The carboxyl components (2) contained in the polyester polyol (a2) are comprised of 0 wt-% to 20 wt-% of at least one (cyclo)aliphatic monocarboxylic acid and 80 wt-% to 100 wt-%, preferably exclusively of at least one dicarboxylic acid.

Examples of (cyclo)aliphatic monocarboxylic acids that may be used as carboxyl components (2) in the polyester polyol (a2) include saturated fatty acids, such as, e.g. 2-ethylhexanoic acid, isononanoic acid, coconut fatty acid, decanoic acid, dodecanoic acid, tetradecanoic acid, stearic acid, and palmitic acid. Isononanoic acid and coconut fatty acid are preferably used.

Examples of dicarboxylic acids that may be used as carboxyl components (2) in the polyester polyol (a2) include (cyclo)aliphatic dicarboxylic acids, such as tetrahydrophthalic acid, hexahydrophthalic acid, 1,3- and 1,4-cyclohexane dicarboxylic acid, succinic acid, adipic acid, sebacic acid, azelaic acid, dodecane dicarboxylic acid but also maleic acid, fumaric acid and dimer fatty acids, preferably, C₃₆ dimer fatty acids. Dimer fatty acids are technical mixtures that may also contain olefinic and/or aromatic carbon-carbon double bonds. While unsaturated dicarboxylic acids, such as tetrahydrophthalic acid, maleic acid, and fumaric acid are indeed possible, they are preferably not used. Hexahydrophthalic acid, 1,4-cyclohexane dicarboxylic acid, adipic acid and dimer fatty acid are preferred, and in the case of dimer fatty acid those grades containing no or only small proportions of olefinic and/or aromatic carbon-carbon double bonds are particularly preferred. If they exist, the corresponding dicarboxylic acid anhydrides may also be used instead of the dicarboxylic acids.

Optionally, at least one (cyclo)aliphatic hydroxycarboxylic acid (3) may also be contained in the polyester polyol (a2), but in a proportion of not more than 10 wt-% of components (1) to (3) used in the polyester polyol (a2). Examples of hydroxycarboxylic acids include 12-hydroxystearic acid, 6-hydroxyhexanoic acid, citric acid, tartaric acid, and dimethylolpropionic acid. If they exist, the corresponding lactones may also be used instead of the monohydroxycarboxylic acids.

The polyester polyol (a2) is very branched and composed randomly of components (1) to (3).

The polyester polyol (a2) may be prepared by polycondensation of the above-mentioned components (1), (2) and optionally (3), components (1) to (3) being selected according to type and quantity such that the above-mentioned characteristic values (calculated molecular mass, calculated hydroxyl functionality, and hydroxyl and acid values) are obtained for the polyester polyol (a2). Polycondensation may be carried out by the conventional methods known to the skilled person, for example, in the presence of conventional esterification catalysts and at elevated temperatures from, e.g. 180°C to 250° C, for example, in the melt. Optionally, entrainers, such as, e.g. xylene, may also be used. Components (1) to (3) may be reacted together to form polyester polyol (a2) in a multi-step or preferably one-step synthesis process. All of the components (1) to (3) are preferably charged at the same time and heated together, optionally, melted and polycondensed with one another to form the polyester polyol (a2).

The resin solids content of the coating agents according to the invention may contain up to 50, preferably less than 30 wt-%, of component (b). Particularly preferably, it contains no component (b).

Component (b) contains at least one hydroxyl-functional binder different from the polyester polyol/(meth)acrylic copolymer hybrid binder (a), particularly hydroxyl-functional (meth)acrylic copolymer resins, hydroxyl-functional polyurethane resins, and hydroxyl-functional polyester resins and/or at least one hydroxyl-functional reactive diluent.

Examples of hydroxyl-functional binders (b) include conventional hydroxyl-functional polyester resins or polyurethane resins having a number average molecular mass from 500 to 5000, preferably from 1000 to 3000 and hydroxyl values from 30 to 250, preferably from 50 to 200 mg KOH/g and hydroxyl-functional (meth)acrylic copolymer resins having a number average molecular mass from 1000 to 10,000 and hydroxyl values from 30 to 200, preferably from 50 to 180 mg KOH/g.

Examples of hydroxyl-functional reactive diluents (b) include low molecular weight compounds having a molecular mass of, for example, below 500, at least two hydroxyl groups per molecule and hydroxyl values in the range from 250 to 700 mg KOH/g. Oligomeric or polymeric polyols are suitable, such as polyether polyols, oligoester polyols, polycarbonate polyols, polycaprolactone polyols and oligourethane polyols.

Component (c) of the resin solids is a cross-linking agent for the hydroxyl-functional components (a) and (b). More particularly, it is a conventional cross-linking agent component for the cross-linking of hydroxyl-functional binders, such as aminoplastic resins, particularly melamine resins, polyisocyanates of which the NCO groups may be blocked, and/or transesterification cross-linking agents, such as tris(alkoxycarbonylamino)triazines.

Preferred cross-linking agents (c) are free polyisocyanates; in that case, the coating agents according to the invention are prepared only shortly before application by mixing components stored separately from one another, one of the components containing the free polyisocyanate cross-linking agent.

Examples of polyisocyanates that may be used in the free or blocked form as cross-linking agents (c) include nonane triisocyanate, tetramethylxylylene diisocyanate and (cyclo)aliphatic diisocyanates, such as 1,6-hexane diisocyanate, trimethylhexane diisocyanate, 1,12-dodecane diisocyanate, cyclohexane diisocyanate, isophorone diisocyanate, biscyclohexylmethane diisocyanate or mixtures thereof, and polyisocyanates derived from such diisocyanates, for example, those containing heteroatoms in the radical linking the isocyanate groups. Examples thereof include polyisocyanates containing carbodiimide groups, allophanate groups, isocyanurate groups, uretidione groups, urethane groups and/or biuret groups.

The conventional coating polyisocyanate cross-linking agents are particularly suitable, particuarly, e.g. tris-(6-isocyanatohexyl)biuret, isophorone diisocyanate isocyanurate or hexane diisocyanate isocyanurate.

Suitable blocking agents for the polyisocyanate cross-linking agents described above include the conventional, for example, CH-acidic, NH-, SH- or OH-functional blocking agents. Examples include acetyl acetone, acetoacetic acid alkyl esters, malonic acid dialkyl esters, aliphatic or cycloaliphatic alcohols, oximes, lactams, imidazoles, and pyrazoles.

The coating agents according to the invention in the state ready for application have a solids content, formed from the resins solids and optionally contained non-volatile additives and optionally contained pigments, from 40 wt-% to 80 wt-%. They contain, as volatile constituents, organic solvents and/or water.

Examples of organic solvents that may be used in the coating agents include glycol ethers, such as butyl glycol, butyl diglycol, dipropylene glycol dimethyl ether, dipropylene glycol monomethyl ether, and ethylene glycol dimethylether; glycol ether esters, such as ethyl glycol acetate, butyl glycol acetate, butyl diglycol acetate, and methoxypropyl acetate; esters, such as butyl acetate, isobutyl acetate, and amyl acetate; ketones, such as methyl ethyl ketone, methyl isobutyl ketone, diisobutyl ketone, cyclohexanone, and isophorone; alcohols, such as methanol, ethanol, propanol, and butanol; aromatic hydrocarbons, such as xylene, Solvesso® 100 (mixture of aromatic hydrocarbons with a boiling range from 155°C to 185°C), Solvesso® 150 (mixture of aromatic hydrocarbons with a boiling range from 182°C to 202°C) and aliphatic hydrocarbons.

The coating agents may contain conventional coating additives in amounts of, for example, up to 5 wt-%, based on coating agent ready for application, for example, leveling agents, rheology influencing agents, such as pyrogenic silica, urea group-containing reaction products of amines and polyisocyanates ("sagging control agents"), catalysts, colorants, light stabilizers, UV absorbers, antioxidants, polymer microparticles, such as microgels, and substances releasing formaldehyde.

Depending on the intended use as clear coat coating agent or as opaque coating agent, the coating agents may be unpigmented, transparent or contain opaque pigments. They may therefore contain fillers and/or transparent, color-imparting and/or special effect-imparting pigments. Examples of inorganic or organic color-imparting pigments include titanium dioxide, micronized titanium dioxide, iron oxide pigments, carbon black, azo pigments, phthalocyanine pigments, and quinacridone or pyrrolopyrrole pigments. Examples of special effect-imparting pigments include metallic pigments, e.g. of aluminum, copper or other metals; interference pigments, e.g. metal oxide-coated metallic pigments, e.g. titanium dioxide-coated or mixed oxide-coated aluminum, coated mica, e.g. titanium dioxide-coated mica and graphite effect-like special-effect pigments. Examples of suitable fillers include silica, aluminum silicate, barium sulfate, calcium carbonate and talc.

The coating agents according to the invention may be based on organic solvents or on water. Conversion into the aqueous form may proceed in conventional manner known to the skilled person by neutralizing acid groups of the polyester polyol/(meth)acrylic copolymer hybrid binder (a) and optionally of the binder(s) (b) with bases such as amines and/or aminoalcohols and/or by adding emulsifiers and performing conversion into the aqueous phase. Organic solvents may be removed before or after the addition of water, for example, by distillation. Conversion to the aqueous phase may take place, for example, using rotor-stator units.

The coating agents according to the invention may be used, for example, in the preparation of multi-layer coatings on any substrates, for example, of metal, plastic or substrates composed of a mixed construction of metal and plastic, and in particular for the preparation of an external pigmented top coat or transparent clear coat layer of a multi-layer coating. The external coating layer may be applied, for example, by the wet-in-wet method to a precoating applied to a substrate, whereupon both layers are cured together. The invention also relates, therefore, to the process for the preparation of multi-layer coatings. The coating agents according to the invention may be applied preferably as transparent clear coats to layers applied from aqueous or solvent-containing color-imparting and/or special effect-imparting base coats.

The coating agents according to the invention are applied by known methods, particularly by spraying in a dry layer thickness of, for example, 15 µm to 50 µm. After a generally proven short flash-off phase, the applied coating agent is cross-linked preferably by heating. The baking temperatures are preferably from 60°C to 160°C, particularly preferably from 120°C to 150°C. The curing times are, for example, of the order of magnitude of 20 minutes to 40 minutes. A cross-linked, glossy lacquer coating is obtained.

The coating agents according to the invention are particularly suitable for the preparation of the above-mentioned multi-layer coatings in the field of automotive OEM and repair finishing, both of automotive bodies and body parts.

The coatings applied from the coating agents according to the invention and cured are distinguished, even at a low content of polyester polyol (a2) in the polyester polyol/(meth)acrylic copolymer hybrid binder (a), by simultaneously exhibiting elevated resistance to chemicals, outstanding mar and scratch resistance and very good hardness.

### Examples

### Example 1 (Production of a hydroxy-functional oligoester according to Example 5 from EP 0 579 193 B1):

336.7 g of trimethylolpropane, 366.8 g of adipic acid and 297 g of hexanediol were melt-esterified at 180 to 220°C with 5 g of hypophosphorous acid (esterification catalyst) in an apparatus suitable for polyester synthesis until an acid value of 20 mg of KOH/g was obtained. Esterification was then continued under a vacuum until an oligoester having a calculated molecular mass of 361, a calculated OH-functionality of 3, an acid value of 1.5 mg of KOH/g and a hydroxyl value of 460 mg of KOH/g was obtained.

### Example 2 (Production of an oligoester/polymethacrylate hybrid polymer):

A mixture of 20 parts of ethoxypropanol and 24 parts of the oligoester from Example 1 were initially introduced into an apparatus suitable for free-radical solution polymerisation, heated to 135°C and then a mixture of 2.05 parts of acrylic acid, 17.12 parts of hydroxyethyl methacrylate, 13.27 parts of styrene, 11.47 parts of butyl acrylate, 8.86 parts of lauryl acrylate and 3.23 parts of dicumyl peroxide was apportioned over a period of 3 hours at 135°C and, once apportionment was complete, the temperature was maintained at 135°C for a further 3 hours. The resultant hybrid polymer had an acid value of 21 mg of KOH/g and a hydroxyl value of 231 mg of KOH/g.

### Example 3 (Production of an oligoester/polymethacrylate hybrid polymer):

A mixture of 20 parts of ethoxypropanol and 24 parts of the oligoester from Example 1 were initially introduced into an apparatus suitable for free-radical solution polymerisation, heated to 135°C and then a mixture of 2.05 parts of acrylic acid, 17.11 parts of hydroxyethyl methacrylate, 7.60 parts of styrene, 13.19 parts of butyl acrylate, 12.82 parts of lauryl acrylate and 3.23 parts of dicumyl peroxide was apportioned over a period of 3 hours at 135°C and, once apportionment was complete, the temperature was maintained at 135°C for a further 3 hours. The resultant hybrid polymer had an acid value of 21 mg of KOH/g and a hydroxyl value of 231 mg of KOH/g.

### Example 4 (Production of a polyester polyol):

470 g of trimethylolpropane, 425 g of hexahydrophthalic anhydride and 105 g of Pripol 1009 (dimer fatty acid from Henkel) were melt-esterified at 180 to 220°C with 5 g of hypophosphorous acid (esterification catalyst) in an apparatus suitable for polyester synthesis until an acid value of 20 mg of KOH/g was obtained. Esterification was then continued under a vacuum until a polyester having a calculated molecular mass of 1390, a calculated OH-functionality of 7, an acid value of 7.0 mg of KOH/g and a hydroxyl value of 278 mg of KOH/g was obtained.

### Example 5 (Production of an oligoester/polymethacrylate hybrid polymer):

A mixture of 20 parts of ethoxypropanol and 24 parts of the oligoester from Example 4 were initially introduced into an apparatus suitable for free-radical solution polymerisation, heated to 135°C and then a mixture of 1.85 parts of acrylic acid, 27.36 parts of hydroxyethyl methacrylate, 5.25 parts of styrene, 10.56 parts of butyl acrylate, 7.75 parts of lauryl acrylate and 3.23 parts of dicumyl peroxide was apportioned over a period of 3 hours at 135°C and, once apportionment was complete, the temperature was maintained at 135°C for a further 3 hours. The resultant hybrid polymer had an acid value of 21 mg of KOH/g and a hydroxyl value of 231 mg of KOH/g.

### Examples 6 a-c (Production of clear coats and multilayer coatings):

Clear coats were produced by mixing the constituents listed in Table 1.

Panels of automotive steel precoated with a conventional commercial cathodic electrodeposition primer (18 µm) and conventional commercial primer surfacer (35 µm) and a flashed-off black water-bome base coat were overcoated with clear coats 6a-c (6a, 6b Comparative Examples; 6c Example according to the invention) to a dry film thickness of 45 µm and, after 5 minutes' flashing off at 20°C, were baked for 20 minutes at 140° C (object temperature). Table 1 shows the results of technological tests.

**Table 1:**

| | 6a* | 6b* | 6c |
|---|---|---|---|
| 80 wt.% resin solution from Example 2 | 45.1 | ./. | ./. |
| 80 wt.% resin solution from Example 3 | ./. | 45.1 | ./. |
| 80 wt.% resin solution from Example 5 | ./. | ./. | 45.1 |
| Ethylene glycol monobutyl ether acetate | 54.6 | 54.6 | 54.6 |
| Silicone additive ¹⁾ | | | |
| Crosslinking agent ²⁾ | 44.7 | 44.7 | 44.7 |
| Pendulum hardness, DIN EN ISO 1522; oscillations | 71 | 50 | 57 |
| Xylene test ³⁾ | 1 | 1 | 0 |
| Pendulum hardness after xylene test 4) | 15 | 17 | 57 |
| Sulfuric acid resistance ⁵⁾ | 20 | 17 | 23 |
| Resistance to wash scratching ⁶⁾ | 74 | 77 | 79 |

| | | | |
|---|---|---|---|
| * comparative examples 1) WorleeAdd 315 from Worlee-Chemie GmbH, Lauenburg 2) 80 wt.% solution of Desmodur N 3300 (from Bayer) in ethylene glycol monobutyl ether acetate 3) A piece of filter paper soaked with xylene was laid on the clear coat surface for 10 minutes and covered with a watch glass. Once the watch glass and filter paper had been removed and any residues of xylene carefully removed with a paper cloth, visual assessment was immediately performed using the following scale: 0, surface without any visible marks 1, surface slightly swollen 2, surface severely swollen 3, surface dissolved/detached 4) After the xylene test and 10 minutes' regeneration time, pendulum hardness was determined once again. 5) The metal test sheets were laid on a hot plate at a temperature of 65°C and one drop of 10 wt.% sulfuric acid was applied at one minute intervals (total of 30 drops). The coating surface was then washed with water and assessed visually. The value stated was the time in minutes after which the first change/damage to the coating surface occurred. 6) Residual gloss was measured in % (ratio of initial gloss of the clear coat surface to its gloss after wash scratching, gloss measurement in each case being performed at an angle of illumination of 20°). Wash-scratching was performed using an Amtec Kistler laboratory car wash system (c.f. Th. Klimmasch and Th. Engbert, Entwicklung einer einheitlichen Laborprüfmethode für die Beurteilung der Waschstraßenbeständigkeit von Automobil-Decklacken [development of a standard laboratory test method for evaluating resistance of automotive top coats to car wash systems], in DFO proceedings 32, pages 59 to 66, technology seminars, proceedings of the seminar on 29-30.4.97 in Cologne, published by Deutsche Forschungsgesellschaft für Oberflächenbehandlung e.V., Adersstraße 94, 40215 Düsseldorf). | | | |

## Claims

1. A coating agent with resin solids comprising
(a) 10 to 80 wt-% of a polyester polyol/(meth)acrylic copolymer hybrid binder with an acid value from 0 to 40 mg KOH/g and a hydroxyl value from 100 to 250 mg KOH/g,
(b) 0 to 50 wt-% of at least one constituent selected from the group consisting of hydroxyl-functional binders that are different from the polyester polyol/(meth)acrylic copolymer hybrid binder (a), hydroxyl-functional reactive diluents and combinations thereof, and
(c) 20 to 60 wt-% of at least one cross-linking agent for the hydroxyl-functional components (a) and (b);
wherein the polyester polyol/(meth)acrylic copolymer hybrid binder (a) is obtained by free-radically copolymerizing in a non-aqueous phase 55 to 90 wt-% of a (meth)acrylic monomer mixture (a1) comprising free-radically copolymerizable, olefinically unsaturated monomers in the presence of 10 to 45 wt-% of a non-aromatic polyester polyol (a2) having a calculated molecular mass from 600 to 1400, an acid value from 0 to 30 mg KOH/g and a hydroxyl value from 250 to 600 mg KOH/g with a calculated hydroxyl functionality of 4.5 to 10, wherein the polyester polyol (a2) comprises
(1) hydroxyl components comprising 0 wt-% to 20 wt-% of at least one diol and 80 wt-% to 100 wt-% of at least one polyol having 3 to 6 hydroxyl groups,
(2) carboxyl components comprising 0 wt-% to 20 wt-% of at least one monocarboxylic acid and 80 wt-% to 100 wt-% of at least one dicarboxylic acid, and optionally
(3) at least one hydroxycarboxylic acid component;
wherein the sum of the percentages by weight of components (a) to (c) and of components (1) and of components (2) is 100% in each case.

2. The coating agent of claim 1, wherein the polyester polyol/(meth)acrylic copolymer hybrid binder (a) is obtained by free-radically copolymerizing 70 to 90 wt-% of the monomer mixture (a1) in the presence of 10 to 30 wt-% of the non-aromatic polyester polyol (a2).

3. The coating agent of claim 1 or 2, wherein the polyester polyol (a2) comprises 30 to 60 wt-% of at least one hydroxyl component (1), 30 to 70 wt-% of at least one carboxyl component (2) and 0 to 10 wt-% of at least one hydroxylcarboxylic acid (3).

4. The coating agent of any one of the preceding claims, wherein the hydroxyl component (1) comprises at least one (cyclo)aliphatic polyol having 3 to 6 hydroxyl groups.

5. The coating agent of any one of the preceding claims, wherein the carboxyl component (2) comprises at least one dicarboxylic acid.

6. The coating agent of any one of the preceding claims, wherein the cross-linking agent (c) is selected from the group consisting of aminoplastic resins, free polyisocyanates, blocked polyisocyanates, transesterification cross-linking agents and combinations thereof.

7. The coating agent of any one of the preceding claims, wherein said coating agent is selected from the group consisting of aqueous coating agents and coating agents based on organic solvents.

8. A process which comprises applying a multi-layer coating on a substrate using a coating agent according to any one of the preceding claims and curing said coating.

9. A process for forming a coating layer as one coating layer of a multi-layer coating which comprises applying to a substrate a coating layer selected from the group consisting of external pigmented top coat layer and transparent clear coat layer, said coating layer being applied from the coating agent according to any one of the preceding claims and curing said coating layer.

10. The process of claim 8 or 9, wherein the substrates are selected from the group consisting of automotive bodies and body parts.

## Patentansprüche

1. Beschichtungsmittel mit Harzfeststoffen, umfassend
(a) 10 bis 80 Gew.-% eines Polyesterpolyov(meth)acrylcopolymer-Hybrid-Bindemittels mit einem Säurewert von 0 bis 40 mg KOH/g und einem Hydroxylwert von 100 bis 250 mg KOH/g,
(b) 0 bis 50 Gew.-% von mindestens einem Bestandteil, ausgewählt aus der Gruppe bestehend aus hydroxylfunktionellen Bindemitteln, die vom Polyesterpolyol/(meth)acrylcopolymer-Hybrid-Bindemittel (a) verschieden sind, hydroxylfunktionellen reaktionsfähigen Lösungsmitteln und Kombinationen davon, und
(c) 20 bis 60 Gew.-% von mindestens einem Vernetzungsmittel für die hydroxylfunktionellen Komponenten (a) und (b);
wobei das Polyesterpolyol/(meth)acrylcopolymer-Hybrid-Bindemittel (a) durch radikalische Copolymerisation in einer nicht-wässrigen Phase von 55 bis 90 Gew.-% einer (Meth)acryl-Monomer-Mischung (a1) erhalten wird, umfassend radikalisch copolymerisierbare, olefinisch ungesättigte Monomere in Anwesenheit von 10 bis 45 Gew.-% eines nicht-aromatischen Polyesterpolyols (a2) mit einer errechneten Molekularmasse von 600 bis 1400, eines Säurewerts von 0 bis 30 mg KOH/g und einem Hydroxylwert von 250 bis 600 mg KOH/g mit einer errechneten Hydroxylfunktionalität von 4,5 bis 10, wobei das Polyesterpolyol (a2) umfasst
(1) Hydroxylkomponenten, umfassend 0 Gew.-% bis 20 Gew.-% von mindestens einem Diol und 80 Gew.-% bis 100 Gew.-% von mindestens einem Polyol mit 3 bis 6 Hydroxylgruppen,
(2) Carboxylkomponenten, umfassend 0 Gew.-% bis 20 Gew.-% von mindestens einer Monocarboxylsäure und 80 Gew.-% bis 100 Gew.-% von mindestens einer Dicarboxylsäure, und wahlweise
(3) mindestens eine Hydroxylcarboxylsäure;
wobei die Summe der Gewichtsprozentsätze der Komponenten (a) bis (c) und der Komponenten (1) und der Komponenten (2) in jedem Fall 100% beträgt.

2. Beschichtungsmittel nach Anspruch 1, wobei das Polyesterpolyol/(meth)acrylcopolymer-Hybrid-Bindemittel (a) durch radikalische Copolymerisation von 70 bis 90 Gew.-% einer Monomermischung (a1) in Anwesenheit von 10 bis 30 Gew.-% des nicht-aromatischen Polyesterpolyols (a2) erhalten wird.

3. Beschichtungsmittel nach Anspruch 1 oder 2, wobei das Polyesterpolyol (a2) 30 bis 60 Gew.-% von mindestens einer Hydroxylkomponente (1), 30 bis 70 Gew.-% von mindestens einer Carboxylkomponente (2) und 0 bis 10 Gew.-% von mindestens einer Hydroxylcarboxylsäure (3) umfasst.

4. Beschichtungsmittel nach einem der vorhergehenden Ansprüche, wobei die Hydroxylkomponente (1) mindestens ein (cyclo)aliphatisches Polyol mit 3 bis 6 Hydroxylgruppen umfasst.

5. Beschichtungsmittel nach einem der vorhergehenden Ansprüche, wobei die Carboxylkomponente (2) mindestens eine Dicarboxylsäure umfasst.

6. Beschichtungsmittel nach einem der vorhergehenden Ansprüche, wobei das Vernetzungsmittel (c) ausgewählt ist aus der Gruppe bestehend aus aminoplastischen Harzen, freien Polyisocyanaten, blockierten Polyisocyanaten, Umesterungsvemetzungsmitteln und Kombinationen davon.

7. Beschichtungsmittel nach einem der vorhergehenden Ansprüche, wobei das Beschichtungsmittel ausgewählt ist aus der Gruppe bestehend aus wässrigen Beschichtungsmitteln und auf organischen Lösungsmitteln basierenden Beschichtungsmitteln.

8. Verfahren, umfassend Aufbringen einer mehrlagigen Beschichtung auf ein Substrat unter Anwendung eines Beschichtungsmittels nach einem der vorhergehenden Ansprüche und Härten der Beschichtung.

9. Verfahren zum Bilden einer Beschichtungsschicht als eine Beschichtungsschicht einer mehrlagigen Beschichtung, die das Auftragen einer Beschichtungsschicht auf ein Substrat, die ausgewählt ist aus der Gruppe bestehend aus einer äußeren pigmentierten Decklackschicht und einer durchsichtigen Klarlackschicht, wobei die Beschichtungsschicht vom Beschichtungsmittel nach einem der vorhergehenden Ansprüche aufgetragen wird und das Härten der Beschichtungsschicht umfasst.

10. Verfahren nach Anspruch 8 oder 9, wobei die Substrate ausgewählt sind aus der Gruppe bestehend aus Autokarosserien und Karosserieteilen.

## Revendications

1. Agent de revêtement avec des solides résineux comprenant :
(a) 10 à 80 % en poids d'un liant hybride polyol polyester/copolymère (méth)acrylique ayant une valeur d'acide située entre 0 et 40 mg de KOH/g et une valeur hydroxyle allant de 100 à 250 mg de KOH/g,
(b) 0 à 50 % en poids d'au moins un composant sélectionné à partir du groupe constitué de liants hydroxyle fonctionnels différents du liant hybride polyol polyester/copolymère (méth)acrylique (a), de diluants réactifs hydroxyle fonctionnels et de combinaisons de ceux-ci, et
(c) 20 à 60 % en poids d'au moins un agent de réticulation pour les composants hydroxyle fonctionnels (a) et (b);
dans lequel le liant hybride polyol polyester/copolymère (méth)acrylique (a) est obtenu par la copolymérisation par radicaux libres dans une phase non aqueuse de 55 à 90 % en poids d'un mélange monomère (méth)acrylique (a1) comprenant des monomères non saturés oléfiniquement, copolymérisables par radicaux libres en présence de 10 à 45 % en poids de polyol polyester non aromatique (a2) ayant une masse moléculaire calculée de 600 à 1400, une valeur d'acide de 0 à 30 mg de KOH/g et une valeur hydroxyle allant de 250 à 600 mg de KOH/g avec une fonctionnalité hydroxyle calculée de 4,5 à 10, où le polyol polyester (a2) comprend
(1) des composants hydroxyle comprenant 0 à 20 % en poids d'au moins un diol et 80 à 100 % en poids d'au moins un polyol ayant 3 à 6 groupes hydroxyle,
(2) des composants carboxyle comprenant 0 à 20 % en poids d'au moins un acide monocarboxylique et 80 à 100 % en poids d'au moins un acide dicarboxylique, et optionnellement
(3) au moins un composant d'acide hydrocarboxylique;
dans lequel la somme des pourcentages en poids des composants (a) à (c) et des composants (1) et des composants (2) est 100 % à chaque fois.

2. Agent de revêtement selon la revendication 1, dans lequel le liant hybride polyol polyester/copolymère (méth)acrylique (a) est obtenu par la copolymérisation par radicaux libres de 70 à 90 % en poids du mélange monomère (a1) en présence de 10 à 30 % en poids du polyol polyester non aromatique (a2).

3. Agent de revêtement selon la revendication 1 ou 2, dans lequel le polyol polyester (a2) comprend 30 à 60 % en poids d'au moins un composant hydroxyle (1), 30 à 70 % en poids d'au moins un composant carboxyle (2) et 0 à 10 % en poids d'au moins un acide hydrocarboxylique (3).

4. Agent de revêtement selon l'une quelconque des revendications précédentes, dans lequel le composant hydroxyle (1) comprend au moins un polyol (cyclo)aliphatique ayant 3 à 6 groupes hydroxyle.

5. Agent de revêtement selon l'une quelconque des revendications précédentes, dans lequel le composant carboxyle (2) comprend au moins un acide dicarboxylique.

6. Agent de revêtement selon l'une quelconque des revendications précédentes, dans lequel l'agent de réticulation (c) est sélectionné à partir du groupe constitué de résines aminoplastiques, de polyisocyanates libres, de polyisocyanates bloqués, d'agents de réticulation de transestérification et de combinaisons de ceux-ci.

7. Agent de revêtement selon l'une quelconque des revendications précédentes, dans lequel ledit agent de revêtement est sélectionné à partir du groupe constitué d'agents de revêtement aqueux et d'agents de revêtement à base de solvants organiques.

8. Procédé comprenant l'application d'un revêtement multicouche sur un substrat utilisant un agent de revêtement selon l'une quelconque des revendications précédentes, ainsi que le durcissement dudit revêtement.

9. Procédé pour former une couche de revêtement comme une couche de revêtement d'un revêtement multicouche comprenant l'application à un substrat d'une couche de revêtement sélectionnée à partir du groupe constitué d'une couche de recouvrement supérieure pigmentée externe et d'une couche de recouvrement clair transparente, ladite couche de revêtement étant appliquée par l'agent de revêtement selon l'une quelconque des revendications précédentes, ainsi que le durcissement de ladite couche de revêtement.

10. Procédé selon la revendication 8 ou 9, dans lequel les substrats sont sélectionnés à partir du groupe constitué de carrosseries automobiles et de parties de carrosseries.
